# EUROPÄISCHE PATENTSCHRIFT

(11) **EP 1 340 444 B1**
(45) Veröffentlichungstag und Bekanntmachung des Hinweises auf die Patenterteilung: **01.09.2004**
(21) Anmeldenummer: 02405143.5
(22) Anmeldetag: 27.02.2002
(51) Int. Cl.: A47J 43/25, B26D 1/28

(54) **Vorrichtung zum Schaben, Schneiden oder Raffeln von Lebensmitteln**
Device for scraping, slicing or grating food
Dispositif pour râcler, couper ou râper des produits alimentaires

(43) Veröffentlichungstag der Anmeldung: 03.09.2003
(73) Patentinhaber: Lerag Engineering AG, 3011 Bern (CH)
(72) Erfinder: Ramseier, Ernst, 4532 Feldbrunnen (CH)
(74) Vertreter: BOVARD AG - Patentanwälte

(56) Entgegenhaltungen:
- EP-A- 0 081 466
- US-A- 2 080 383

## Beschreibung

Die Erfindung betrifft eine Vorrichtung zum Schaben, Schneiden oder Raffeln von Lebensmitteln, enthaltend eine Stützplatte und eine mit ihr verbundene, senkrecht von ihr abragende Achse, die zur Aufnahme eines um sie rotierbaren Werkzeuges bestimmt ist.

Aus dem Patent EP 0 081 466 ist eine Vorrichtung zum Schaben von Lebensmitteln bekannt, die eine Stützplatte für das Lebensmittel, beispielsweise ein Stück Käse, aufweist, auf welcher eine mit der Stützplatte verbundene, rechtwinklig von ihr abstehende Achse angeordnet ist. Auf die Achse lässt sich von oben ein Schabwerkzeug bringen, dessen Schabkante etwa parallel zur Stützplatte ausgerichtet ist. Durch Drehen des Schabwerkzeugs um die Achse lassen sich feine Lamellen des Lebensmittels von der Oberfläche des Lebensmittels abschaben. Damit das Lebensmittel durch die Drehbewegung des Schabwerkzeuges nicht ebenfalls in Rotation versetzt wird, sind zudem auf der Stützplatte Spitzen angeordnet, die in das Lebensmittel eindringen.

Ein wesentlicher Nachteil der beschriebenen, aus dem Stand der Technik bekannten Vorrichtung besteht darin, dass sie wegen der von der Stützplatte abstehenden Achse sperrig ist und sich daher bei Nichtgebrauch nicht Platz sparend aufbewahren lässt.

Es ist eine Aufgabe der vorliegenden Erfindung, eine Vorrichtung zum Schaben, Schneiden oder Raffeln von Lebensmitteln vorzuschlagen, die einfach und ohne Zuhilfenahme von Werkzeugen zerlegbar ist.

Diese Aufgabe wird erfindungsgemäss dadurch gelöst, dass mit der Achse mindestens eine Lasche drehfest verbunden ist, welche im Abstand von der Achse senkrecht von der Oberfläche der Stützplatte abragt und dass die Achse und die Stützplatte mit Befestigungsmitteln ausgestattet sind, die durch Drehen der Achse gegenüber der Stützplatte verbindbar und lösbar sind, wobei die mindestens eine Lasche einerseits zum Drehen der Achse und andererseits als Verdrehsicherung für das Lebensmittel dient.

Diese Lösung hat den Vorteil, dass die Vorrichtung durch Drehen der Achse mit Hilfe der mindestens einen Lasche zerlegt und wieder zusammengesetzt werden kann.

Nach einer besonderen Ausführungsart der Erfindung sind die Befestigungsmittel als Gewinde ausgebildet. Dies erlaubt nicht nur eine einfache Herstellung der Befestigungsmittel, sondern auch ein leichtes Zusammensetzen und Auseinandernehmen der Vorrichtung, indem die Achse auf die Stützplatte geschraubt bzw. von dieser abgeschraubt wird.

Nach einer anderen Ausführungsart der Erfindung sind die Befestigungsmittel als Bajonettverschluss ausgebildet. Dies hat den Vorteil, dass beim Zusammensetzen bzw. Auseinandernehmen der Vorrichtung etwa eine Vierteldrehung der Achse genügt, um diese mit der Stützplatte zu verbinden bzw. davon zu lösen.

Nach einer weiteren Ausführungsart ist die mindestens eine Lasche an einer auf der Stützplatte aufliegenden Laschenplatte angeordnet. Letztere kann in einfachster Weise mit der Achse verbunden sein. Wenn die Laschenplatte die Form eines Rhomboids hat, lassen sich die Laschen in einfacher Weise mit unterschiedlichen Abständen von der Achse anordnen, wodurch das Rotieren des Lebensmittels auf der Stützplatte zuverlässig verhindert wird.

Die Stützplatte kann prinzipiell jede beliebige geometrische Form aufweisen. Nach bevorzugten Ausführungsarten der Erfindung ist sie aber dreieckig, viereckig, vieleckig oder rund ausgebildet, je nachdem, ob einer Platz sparenden Unterbringung, einem gefälligen Design oder beispielsweise der Verwendung der Vorrichtung auf einem Teller der Vorrang gegeben wird.

Die Stützplatte, die Achse und vorzugsweise auch die mindestens eine Lasche können aus nichtrostendem Stahl ausgebildet sein, wodurch sich diese Teile leicht reinigen lassen, beispielsweise in einem Geschirrspüler.

Wenn die Stützplatte mit Füssen aus einem gummielastischen Material ausgestattet ist, wird deren Bedienung bequemer. Die Füsse können als Saugnäpfe ausgebildet sein, wodurch die Bedienung der Vorrichtung zudem sicherer wird.

Ausführungsbeispiele der Erfindung werden nachstehend unter Bezugnahme auf die beiliegenden Zeichnungen näher erläutert. Es zeigt:
- Figur 1: eine perspektivische Ansicht einer Vorrichtung mit einer Stützplatte in der Form eines Dreiecks,
- Figuren 2 und 3: je eine Schnittansicht eines Teils der Vorrichtung, die ein erstes Beispiel der Befestigung der Achse an der Stützplatte illustriert, wobei Figur 2 die Vorrichtung in zerlegtem und Figur 3 in betriebsbereitem Zustand zeigt,
- Figuren 4 und 5: je eine Schnittansicht eines Teils der Vorrichtung, die ein zweites Beispiel der Befestigung der Achse an der Stützplatte illustriert, wobei Figur 4 die Vorrichtung in zerlegtem und Figur 5 in betriebsbereitem Zustand zeigt,
- Figur 6: eine perspektivische Ansicht einer Vorrichtung mit einer Stützplatte in der Form eines Vierecks,
- Figur 7: eine perspektivische Ansicht einer weiteren Vorrichtung mit einer Stützplatte in der Form eines Dreiecks, wobei die Ecken umgebogen sind,
- Figur 8: eine Abwicklung der Laschenplatte der in Figur 7 gezeigten Ausführungsart, und
- Figur 9: eine Draufsicht auf die Laschenplatte der in Figur 7 gezeigten Ausführungsart.

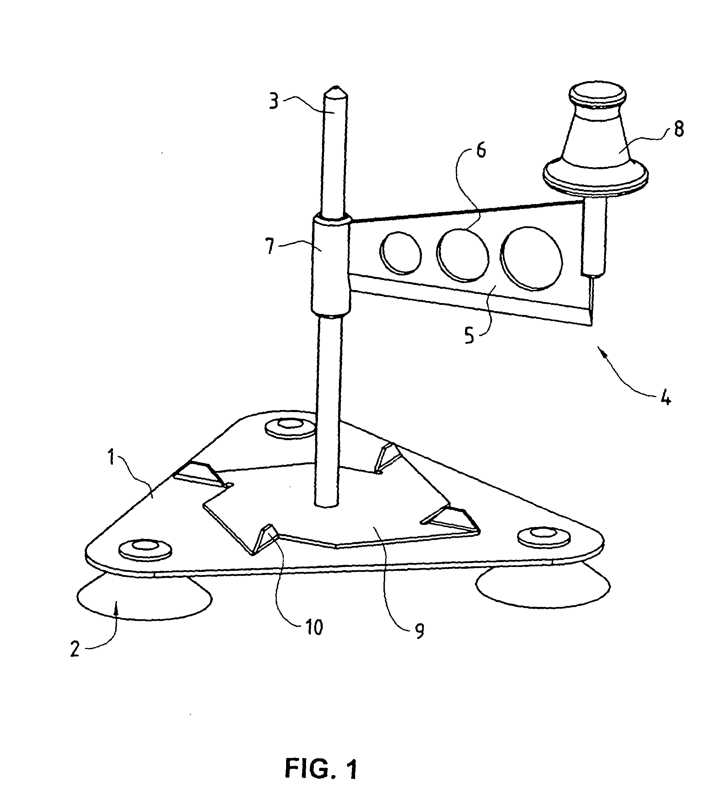

Figur 1 zeigt eine perspektivische Übersichts-Ansicht eines Ausführungsbeispiels der erfindungsgemässen Vorrichtung. Eine Stützplatte 1 dient zur Aufnahme eines Stücks eines Lebensmittels. Die Stützplatte 1 ist auf Füssen 2 gelagert, bei denen es sich vorzugsweise um handelsübliche Saugnäpfe aus einem gummielastischen Kunststoff handelt. Die Verwendung von Saugnäpfen hat den Vorteil, dass die Vorrichtung auf einer glatten Oberfläche haftet und während der Benutzung nicht kippt oder verrutscht. Von der Mitte der Stützplattel ragt eine Achse 3 senkrecht nach oben und ist mit der Stützplatte 1 lösbar verbunden, wie dies weiter unten im Detail erläutert wird. Ein als Ganzes mit 4 bezeichnetes Schabwerkzeug ist auf der Achse 3 frei drehbar und zudem vertikal verschiebbar gelagert. Das beispielhaft gezeigte Schabwerkzeug 4 enthält eine Klinge 5, die im vorliegenden Beispiel mit Löchern 6 als Verzierung ausgestattet ist. Die Klinge 5 ist auf einer Seite mit einer Hülse 7 und auf der anderen Seite mit einem Griff 8 verbunden. Eine Laschenplatte 9 ist mit der Achse 3 drehfest verbunden, ruht auf der Stützplatte 1 und trägt im gezeigten Beispiel vier Laschen 10, deren Ebenen zur Achse 3 hin gerichtet sind. Es könnten aber auch nur zwei oder jede beliebige andere Anzahl von Laschen 10 vorgesehen sein. Zum Platz sparenden Unterbringen der zerlegten Vorrichtung ist eine Laschenplatte mit zwei bezüglich der Achse 3 gegenüberliegenden Laschen 10 vorteilhaft.

Zur Benutzung der Vorrichtung wird das genannte Stück eines Lebensmittels von oben über die Achse 3 gesteckt und so weit nach unten geschöben, bis die Laschen 10 in das Stück eindringen und es am Drehen um die Achse 3 hindern. Das Lebensmittel kann beispielsweise Käse sein, insbesondere von der vielerorts unter dem Namen "Tête de Moine" bekannten Sorte. Dann wird das Schabwerkzeug 4 von oben über die Achse 3 geschoben, bis seine Klinge 5 auf dem Lebensmittel aufliegt. Durch Drehen des Schabwerkzeugs 4 um die Achse 3 können nun vom Lebensmittel feine Lamellen abgeschabt werden, wobei diese Lamellen umso dicker werden, je stärker die vertikale Kraft ist, mit welcher der Benutzer das Schabwerkzeug 4 an das Lebensmittel andrückt. Das Erzeugen von gleichmässig dicken Lamellen erfordert vom Benutzer etwas Übung. Dabei hat sich gezeigt, dass die Benutzung von Füssen 2 aus einem weichen Material das Herstellen gleichmässiger Lamellen begünstigt. Da solche Füsse 2 dem vom Benutzer ausgeübten Druck nachgeben, führt die ganze Vorrichtung während der Betätigung eine leichte Taumelbewegung aus, wodurch ungleichmässig ausgeübter Druck teilweise ausgeglichen wird.

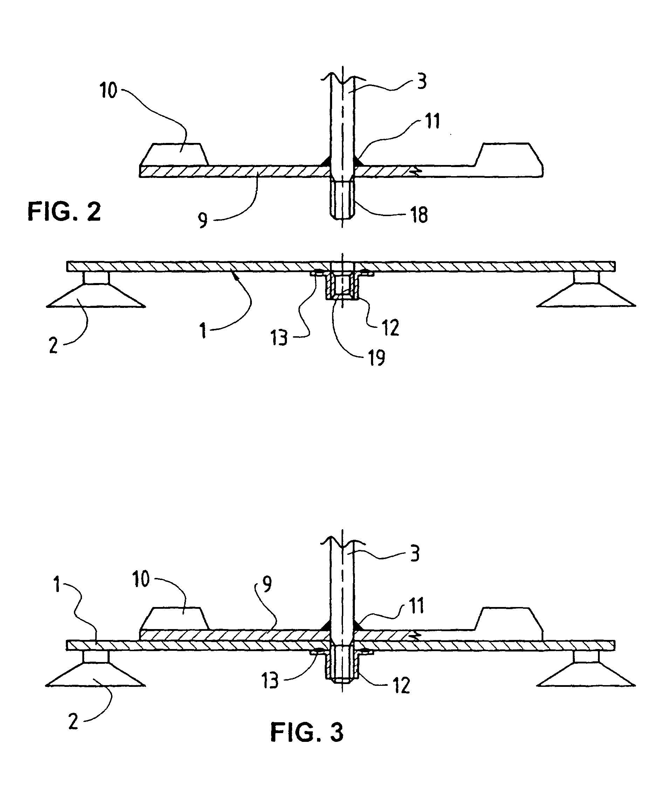

Die Figuren 2 und 3 zeigen eine erste Möglichkeit einer lösbaren Befestigung der Achse 3 an der Stützplatte 1. Wie man besonders deutlich in Figur 2 sieht, ist die Achse 3 fest mit der Laschenplatte 9 verbunden, im vorliegenden Beispiel durch eine Schweissnaht 11. Das unten über die Laschenplatte 9 vorstehende Ende der Achse 3 ist mit einem Aussengewinde 18 versehen. In der Mitte der Stützplatte 1 befindet sich ein Durchgangsloch und an ihrer Unterseite ist eine Mutter 12 durch eine Schweissnaht 13 befestigt. Zum Verbinden der Achse 3 mit der Stützplatte 1 wird das Aussengewinde 18 in das Innengewinde 19 der Mutter 12 geschraubt, wobei die Laschen 10 als Betätigungsmittel dienen, indem, ähnlich wie bei einer Flügelmutter, mit der Hand daran gegriffen und die Laschenplatte 9 mitsamt der Achse 3 gedreht wird. Auf die selbe Weise lässt sich die Achse 3 auch wieder von der Stützplatte 1 entfernen. Selbstverständlich kann diese Befestigungsart auch derart ausgestaltet werden, dass am unteren Ende der Achse 3 eine Bohrung mit einem Innengewinde und auf der Oberfläche ein Bolzen mit einem Aussengewinde angebracht wird.

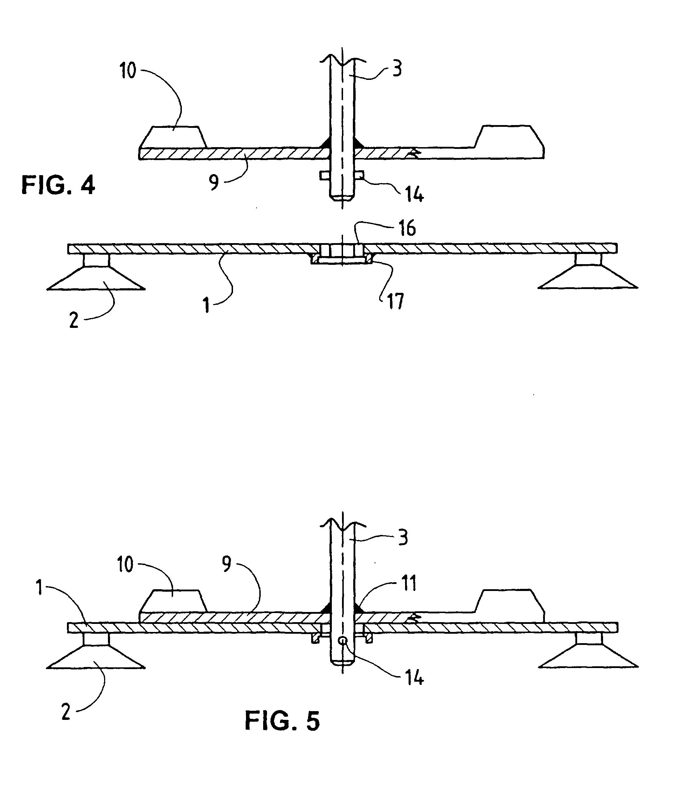

Die Figuren 4 und 5 zeigen eine zweite Möglichkeit einer lösbaren Befestigung der Achse 3 an der Stützplatte 1. Wie beim Beispiel nach den Figuren 2 und 3 ist auch hier die Achse 3 durch eine Schweissnaht 11 fest mit der Laschenplatte 9 verbunden. Das unten über die Laschenplatte 9 vorstehende Ende der Achse 3 weist in diesem Beispiel einen Stift 14 auf, der die Achse 3 in einem rechten Winkel durchragt. In der Mitte der Stützplatte 1 befindet sich ein Durchgangsloch, an dessen Umfang zwei Schlitze 16 derart angeordnet sind, dass die Achse 3 mit dem Stift 14 in der in Figur 4 gezeigten Ausrichtung hindurchpasst. An der Unterseite der Stützplatte 1 kann wie gezeigt eine Verstärkungsscheibe 17 angeordnet sein. Das Verbinden der Achse 3 mit der Stützplatte 1 erfolgt bei diesem Beispiel nach der Art eines Bajonettverschlusses. Das untere Ende der Achse 3 wird ausgehend von der in Figur 4 dargestellten Lage in das genannte Durchgangsloch in der Stützplatte 1 gesteckt und dann wird die Achse 3 mit Hilfe der Laschen 10 in die in Figur 5 dargestellte Lage gedreht. Es kann ein Anschlag vorgesehen sein, der beispielsweise an der Verstärkungsscheibe angeordnet ist und mit dem Stift 14 zusammenwirkt, um die Drehbewegung der Achse zu begrenzen.

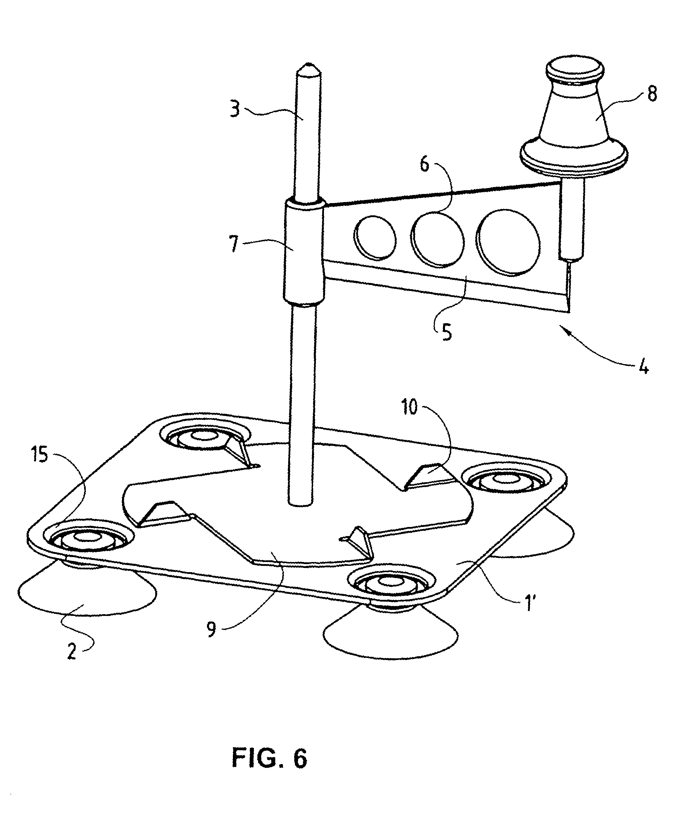

Figur 6 zeigt eine andere Ausführungsart der Vorrichtung, bei der die Stützplatte 1' eine viereckige, vorzugsweise quadratische Form hat. Zudem sind bei dieser Stützplatte 1' im Bereich der Füsse 2 Ansenkungen 15 vorgesehen, durch welche erreicht wird, dass die die Stützplatte 1' durchragenden Befestigungsenden der Füsse 2 die Oberfläche der Stützplatte 1' nicht überragen.

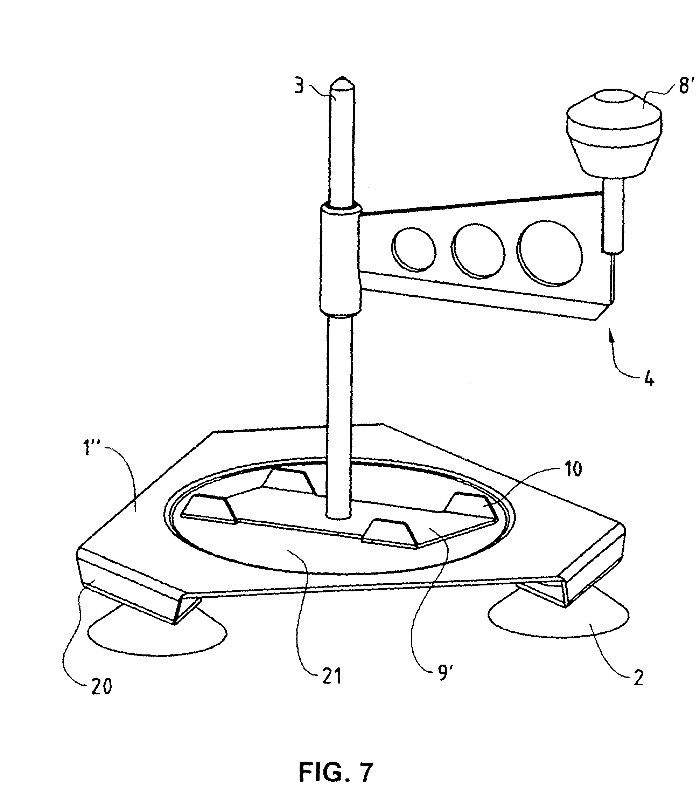

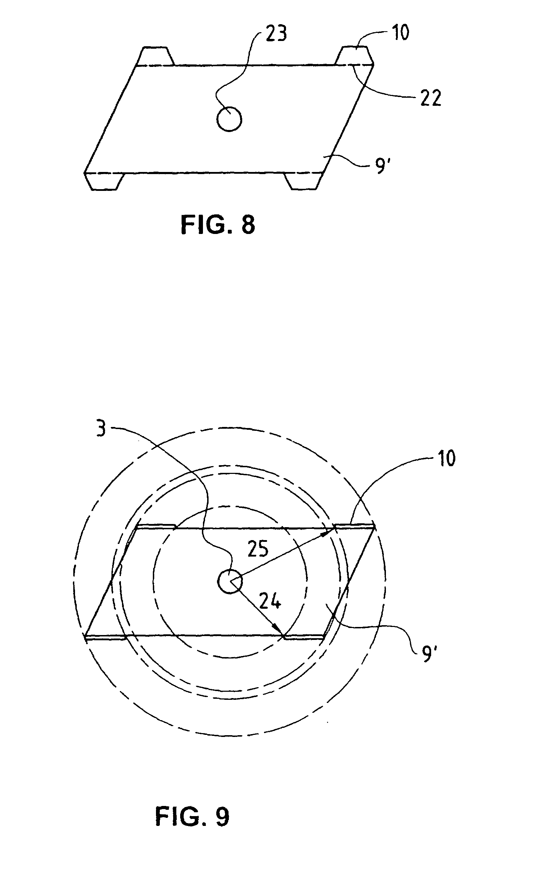

Figur 7 zeigt eine weitere Ausführungsart der erfindungsgemässen Vorrichtung. Die Stützplatte 1" ist hier, ähnlich wie bei der Ausführungsart nach Figur 1, dreieckig, wobei aber hier die Ecken nicht abgerundet sind, sondern eine Abkantung 20 um zwei mal 90° aufweisen. Dies erlaubt die Befestigung der Füsse 2, ohne dass diese nach oben über die Stützplatte 1" hinausragen. Der Griff 8' des Schabwerkzeugs 4 hat eine etwas andere Form als der Griff 8 in den Figuren 1 und 6. Die Laschenplatte 9' unterscheidet sich von den in den Figuren 1 und 6 gezeigten Laschenplatten 9 und wird nachfolgend anhand der Figuren 8 und 9 noch genauer beschrieben. Die Laschenplatte 9' ruht in einer in der Stützplatte 1" geformten Vertiefung 21, so dass die Oberflächen der Stützplatte 1" und der Laschenplatte 9' in der selben Ebene liegen und ein Stück eines Lebensmittels grossflächig aufliegt.

Die Figuren 8 und 9 zeigen die Laschenplatte 9' nach dem Ausführungsbeispiel gemäss Figur 7. Dabei zeigt Figur 8 den entsprechenden Zuschnitt, der beispielsweise aus Blech hergestellt werden kann. Das zentrale Loch 23 dient zur Aufnahme der Achse 3 und die Laschen 10 werden später um die Biegelinien 22 nach oben gebogen. Figur 9 verdeutlicht, warum die Laschenplatte 9' nicht rechteckig ist, sondern die Form eines Rhomboids hat. Würde die Laschenplatte 9' die Form eines Rechtecks haben, hätte jede Lasche 10 den selben Abstand von der Achse 4. Wenn ein Lebensmittel, beispielsweise ein Käse, sich trotz den Laschen 10 auf der Stützplatte 1" zu drehen begänne, würde sich an dessen Boden eine Art Ringnut bilden und der Käse könnte sich dann praktisch frei drehen. Durch die Ausbildung der Laschenplatte 9' haben je zwei Laschen 10 einen unterschiedlichen Abstand von der Achse, wie dies durch die Pfeile 24 und 25 verdeutlicht wird. Somit kann durch diese Ausbildung die Gefahr einer Ringnutbildung vermindert werden.

Alle Teile der Vorrichtung können aus nahezu beliebigem Werkstoff hergestellt werden. Beispielsweise kann die Stützplatte 1 aus Holz oder Kunststoff bestehen, wobei zum Beispiel eine Gewindebüchse zur Aufnahme der Achse 3 eingesetzt sein kann. Vorzugsweise sind aber insbesondere die Stützplatte 1 bzw. 1', die Achse 3, das Schabwerkzeug 4, die Laschenplatte 9, die Mutter 12 und der Stift 14 aus nichtrostendem Stahl hergestellt, wie er in der Lebensmittelindustrie verwendet wird.

Die erfindungsgemässe Vorrichtung kann nicht nur mit dem dargestellten Schabwerkzeug 4 ausgerüstet und betrieben werden, sondern es können vielerlei andere Werkzeuge zum Schaben, Schneiden oder Raffeln verwendet werden.

## Patentansprüche

1. Vorrichtung zum Schaben, Schneiden oder Raffeln von Lebensmitteln, enthaltend eine Stützplatte (1; 1'; 1") und eine mit ihr verbundene, senkrecht von ihr abragende Achse (3), die zur Aufnahme eines um sie rotierbaren Werkzeuges (4) bestimmt ist, **dadurch gekennzeichnet, dass** mit der Achse (3) mindestens eine Lasche (10) drehfest verbunden ist, welche im Abstand von der Achse (3) senkrecht von der Oberfläche der Stützplatte (1; 1'; 1") abragt und dass die Achse (3) und die Stützplatte (1; 1'; 1") mit Befestigungsmitteln (18, 19; 14, 16) ausgestattet sind, die durch Drehen der Achse (3) gegenüber der Stützplatte (1; 1'; 1") verbindbar und lösbar sind, wobei die mindestens eine Lasche (10) einerseits zum Drehen der Achse (3) und andererseits als Verdrehsicherung für das Lebensmittel dient.

2. Vorrichtung nach Anspruch 1, **dadurch gekennzeichnet, dass** die Befestigungsmittel als Gewinde (18, 19) ausgebildet sind.

3. Vorrichtung nach Anspruch 1, **dadurch gekennzeichnet, dass** die Befestigungsmittel als Bajonettverschluss (14, 16) ausgebildet sind.

4. Vorrichtung nach einem der vorangehenden Ansprüche, **dadurch gekennzeichnet, dass** die mindestens eine Lasche (10) an einer auf der Stützplatte (1) aufliegenden Laschenplatte (9) angeordnet ist.

5. Vorrichtung nach Anspruch 4, **dadurch gekennzeichnet, dass** die Laschenplatte (9') die Form eines Rhomboids hat, wobei die mindestens eine Lasche (10 parallel zur längeren Seite gerichtet ist.

6. Vorrichtung nach einem der vorangehenden Ansprüche, **dadurch gekennzeichnet, dass** die Stützplatte (1) drei- vier- oder vieleckig ausgebildet ist.

7. Vorrichtung nach einem der Ansprüche 1 bis 5, **dadurch gekennzeichnet, dass** die Stützplatte rund ausgebildet ist.

8. Vorrichtung nach einem der vorangehenden Ansprüche, **dadurch gekennzeichnet, dass** die Stützplatte (1; 1'; 1"), die Achse (3) und vorzugsweise auch die mindestens eine Lasche (10) aus nichtrostendem Stahl ausgebildet sind.

9. Vorrichtung nach einem der vorangehenden Ansprüche, **dadurch gekennzeichnet, dass** die Stützplatte (1; 1'; 1") mit Füssen (2) aus einem gummielastischen Material ausgestattet ist.

10. Vorrichtung nach Anspruch 9, **dadurch gekennzeichnet, dass** die Füsse als Saugnäpfe ausgebildet sind.

## Claims

1. Device for scraping, slicing or grating food, containing a support plate (1; 1'; 1") and a shaft (3) connected thereto, projecting perpendicularly therefrom, which is intended for receiving a tool (4) rotatable around it, **characterised in that** at least one tab (10) is connected to the shaft (3) in a torque-proof way, which tab projects, spaced away from the shaft (3), perpendicular from the surface of the support plate (1; 1'; 1"), and **in that** the shaft (3) and the support plate (1; 1'; 1") are provided with fixing means (18, 19; 14, 16), which are connectible and detachable through rotation of the shaft (3) with respect to the support plate (1; 1'; 1"), the at least one tab serving, on the one hand, for rotation of the shaft (3) and, on the other hand, as anti-twisting device for the food.

2. Device according to claim 1, **characterised in that** the fixing means are designed as screw thread (18, 19).

3. Device according to claim 1, **characterised in that** the fixing means are designed as a bayonet closure (14, 16).

4. Device according to one of the preceding claims, **characterised in that** the at least one tab (10) is disposed on a tab plate (9) lying on the support plate (1).

5. Device according to claim 4, **characterised in that** the tab plate (9') has the shape of a rhomboid, the at least one tab (10) being directed parallel to the longer side.

6. Device according to one of the preceding claims, **characterised in that** the support plate (1) is of triangular, quadrangular, or polygonal design.

7. Device according to one of the claims 1 to 5, **characterised in that** the support plate is designed round.

8. Device according to one of the preceding claims, **characterised in that** the support plate (1; 1'; 1"), the shaft (3) and preferably also the at least one tab (10) are made of rust-resistant steel.

9. Device according to one of the preceding claims, **characterised in that** the support plate (1; 1'; 1") is provided with feet (2) of a rubber-elastic material.

10. Device according to claim 9, **characterised in that** the feet are designed as suction cups.

## Revendications

1. Dispositif pou racler, couper ou râper des produits alimentaires, comprenant une plaque d'appui (1; 1';1") et un axe (3) montant à la verticale et relié à cette dernière, lequel est destiné au logement d'un outil (4) rotatif autour de lui, **caractérisé en ce qu'**au moins une languette (10) est reliée rigide à la torsion à l'axe (3), languette qui fait saillie à distance de l'axe (3) perpendiculairement de la surface de la plaque d'appui (1; 1';1"), et **en ce que** l'axe (3) et la plaque d'appui (1; 1';1") sont munis de moyens de fixation (18, 19; 14, 16) qui peuvent être reliés ou détachés par rapport à la plaque d'appui (1; 1';1") par rotation de l'axe (3), au moins une languette (10) servant d'une part à tourner l'axe (3) et d'autre part à un blocage de rotation pour l'aliment.

2. Dispositif selon la revendication 1, **caractérisé en ce que** les moyens de fixation sont réalisés comme des filets (18, 19)

3. Dispositif selon la revendication 1, **caractérisé en ce que** les moyens de fixation sont réalisés comme des fermetures à baïonnette (14, 16).

4. Dispositif selon l'une des revendications précédentes, **caractérisé en ce qu'**au moins une languette 810) est disposée sur une plaque porte-languettes (9) reposant sur la plaque d'appui (1).

5. Dispositif selon la revendication 4, **caractérisé en ce que** la plaque porte languette (9') présente la forme d'un rhomboïde, au moins la languette (10) étant orientée parallèlement au côté le plus long.

6. Dispositif selon la revendication 4, **caractérisé en ce que** la plaque d'appui (1) est réalisée de forme triangulaire, quadrangulaire ou polygonale.

7. Dispositif selon l'une des revendications 1 à 5, **caractérisé en ce que** la plaque d'appui est réalisée ronde.

8. Dispositif selon l'une des revendications précédentes, **caractérisé en ce que** la plaque d'appui (1; 1'; 1"), l'axe (3) et de préférence également au moins une languette (10) sont réalisés en acier inoxydable.

9. Dispositif selon l'une des revendications précédentes, **caractérisé en ce que** la plaque d'appui (1; 1';1") est munie de pieds (2) en matériau de caoutchouc élastique.

10. Dispositif selon la revendication 9, **caractérisé en ce que** les pieds sont réalisés comme des ventouses.
